# FASCICULE DE BREVET EUROPEEN

(11) **EP 3 092 165 B1**
(45) Date de publication et mention de la délivrance du brevet: **29.03.2017**
(21) Numéro de dépôt: 15700849.1
(22) Date de dépôt: 06.01.2015
(51) Int. Cl.: B62D 21/15

(54) **POUTRE METALLIQUE A ANGLE DE FLEXION LIMITE**
METALLPFEILER MIT BEGRENZTEM BIEGEWINKEL
METAL BEAM WITH A LIMITED BENDING ANGLE

(30) Priorité: 07.01.2014 FR 1450096
(43) Date de publication de la demande: 16.11.2016
(73) Titulaire: Autotech Engineering, A.I.E., 48340 Amorebieta-Etxano (ES)
(72) Inventeur: CAZES, Christophe, F-78000 Versailles (FR); GATARD, Gregory, F-91310 Leuville-sur-Orge (FR); LEROY, Emmanuel, F-91370 Verrières le Buisson (FR); NIESS, Matthieu, F-89200 Avallon (FR); BARELLI, Vincent, F-91620 La Ville du Bois (FR)
(74) Mandataire: ZBM Patents - Zea, Barlocci & Markvardsen
(86) Numéro de dépôt international: PCT/EP2015/050117
(87) Numéro de publication internationale: WO 2015/104268

(56) Documents cités:
- EP-A2- 0 369 521
- EP-A2- 2 008 910
- EP-A2- 2 008 911
- DE-A1- 19 511 512
- DE-C1- 19 502 226

## Description

### DOMAINE DE L'INVENTION

La présente invention concerne le domaine des pièces métalliques intervenant dans la réalisation d'une ossature métallique, notamment d'un châssis, soubassement ou d'une carrosserie ou caisse de véhicules.

Dans la suite du texte on utilisera indifféremment le terme « châssis » ou « soubassement » sans que celui-ci ne soit limitatif.

### ETAT DE L'ART

On a déjà proposé de nombreuses pièces métalliques participant à la réalisation d'une ossature métallique et susceptibles de déformation en cas de choc prononcé, pour absorber l'énergie du choc, afin de limiter la transmission de cette énergie vers l'habitacle d'un véhicule.

On a en particulier proposé des pièces susceptibles de se déformer à la flexion, par exemple des longerons.

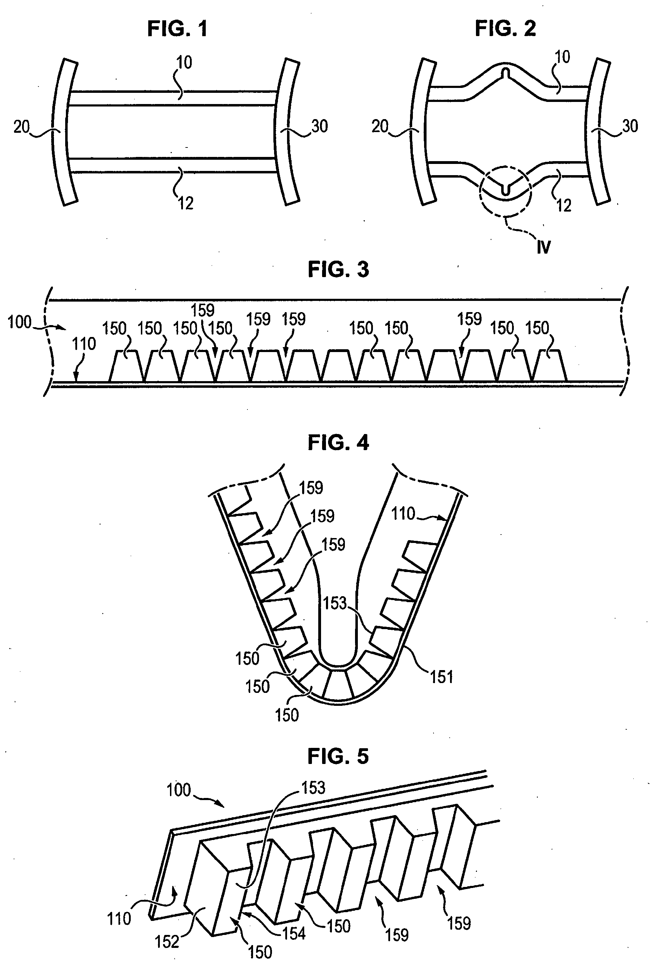

On a ainsi illustré à titre d'exemple non limitatif sur la figure 1 annexée, deux longerons 10, 12, placés entre une structure de pare-choc 20 et un élément 30 de carrosserie à l'état fonctionnel avant impact, et sur la figure 2 les mêmes longerons 10, 12 après flexion résultant d'un choc prononcé.

Par ailleurs de nombreux systèmes ont été proposés pour tenter de contrôler la déformation de pièces, dans des domaines d'application très divers.

Cependant la plupart des systèmes ainsi proposés s'avèrent complexes, couteux et présentent une fiabilité laissant à désirer, de sorte qu'ils ne peuvent pas être mis en oeuvre pour la conception de soubassement de véhicules automobiles.

On a ainsi proposé dans le document EP 0 369 521 une structure formée par la combinaison de 4 tiges équiréparties autour d'un axe pour supporter une roue de direction. L'encombrement et la complexité d'une telle structure ne permettent pas sa transposition sur le soubassement d'un véhicule.

Plus récemment on a proposé par exemple dans les documents JP2006-200703 et EP 2 094 555 des structures comprenant une alternance de zones rigides ne se déformant pas et de zones moins rigides intercalées destinées à être déformées lorsqu'elles reçoivent une sollicitation des zones rigides qui les encadrent. Plus précisément ces structures comprennent au moins 3 éléments composant une alternance d'au moins deux zones rigides ne se déformant pas et d'une zone intercalée moins rigide destinée à être déformée lorsqu'elle reçoit une sollicitation des zones rigides qui l'encadrent. Là encore de par leur complexité, coût et manque de fiabilité lié aux aléas de déformation des zones moins rigides, ces solutions ne peuvent être transposées pour la réalisation de soubassement de véhicules automobiles.

### OBJECTIF GENERAL DE L'INVENTION

Partant du constat que, pour une pièce travaillant à la flexion, il existe un risque de rupture si l'angle de flexion devient trop important, la présente invention a pour objectif de proposer des moyens permettant de limiter le risque d'une telle rupture.

Ce but est atteint selon l'invention grâce à une pièce de structure constituée d'une structure choisie dans le groupe comprenant un tube monopièce de section polygonale ou incurvée quelconque, par exemple un tube de section carrée, ou un tube formé par l'assemblage de plusieurs pièces et comprenant, au moins sur une face, des moyens adaptés pour former, lors d'une flexion de la pièce, au moins deux bossages portés en contact par la flexion de sorte que la flexion de la pièce de structure soit limitée lorsque au moins des portions des faces en regard de deux bossages adjacents viennent en appui.

Comme on le comprendra à la lecture de la description qui va suivre, l'invention permet la réalisation de pièces de soubassement de véhicules automobiles, notamment de longerons, de sorte que lors de leur flexion, par exemple en cas de choc générant une sollicitation axiale de la pièce, les bossages précités viennent en contact à un angle donné de flexion et limitent la flexion de la pièce tout en absorbant de l'énergie. L'invention permet ainsi également de transférer le chargement et d'activer le bon fonctionnement des mécanismes de compression, de flexion et rotules locales des composants du soubassement situés en aval.

Selon un mode de réalisation la pièce destinée à former une poutre métallique pour la réalisation d'un véhicule automobile, comprend au moins sur une face, au moins deux bossages préformés, par exemple une série de bossages, répartis sur sa longueur et définissant entre eux des intervalles de section contrôlée de sorte que la flexion de la poutre soit limitée lorsque au moins des portions des faces en regard des deux bossages adjacents viennent en appui.

Selon une caractéristique avantageuse de la présente invention, les bossages définissent entre eux des intervalles de section croissante en direction du sommet des bossages.

Selon une autre variante de réalisation de l'invention, la pièce comprend des moyens adaptés pour être déformés lors de la flexion et former ainsi au moins deux bossages susceptibles de venir en contact si l'angle de flexion dépasse un seuil.

D'autres caractéristiques, buts et avantages de la présente invention apparaîtront à la lecture de la description détaillée qui va suivre et au regard de dessins annexés donnés à titre d'exemples non limitatifs et sur lesquels :
- les figures 1 et 2 précédemment évoquées représentent schématiquement un exemple de longerons travaillant à la flexion, respectivement avant et après un choc,
- la figure 3 représente schématiquement une pièce munie de bossages conformes à la présente invention, avant flexion,
- la figure 4 représente la même pièce après flexion, et illustre ainsi une vue à échelle agrandie de la zone référencée IV sur la figure 2,
- la figure 5 représente une vue en perspective de bossages conformes à la présente invention,
- la figure 6 représente schématiquement une variante conforme à la présente invention selon laquelle les intervalles formés entre les bossages sont de sections variables sur la longueur de la pièce,
- la figure 7 représente schématiquement une autre variante de réalisation conforme à la présente invention selon laquelle les bossages ont des largeurs variables sur la longueur de la pièce,
- la figure 8 représente une variante de réalisation conforme à la présente invention,
- la figure 9 représente une variante de réalisation selon laquelle deux bossages sont formés par emboutissage d'une face de la pièce,
- la figure 10 représente une vue en perspective de la pièce illustrée sur la figure 9, lors d'une flexion, et illustre la limitation de la flexion par appui des deux bossages formés par emboutissage,
- la figure 11 représente une vue de face de la pièce illustrée sur la figure 9,
- la figure 12a représente une vue en perspective d'une pièce conforme à une autre variante de réalisation de la présente invention, avant flexion, tandis que la figure 12b représente une vue de dessus de cette pièce avant flexion,
- la figure 13 représente une vue en perspective d'une pièce conforme à une autre variante de réalisation de la présente invention, avant flexion,
- la figure 14 représente une vue en perspective d'une pièce conforme à une autre variante de réalisation de la présente invention, après flexion,
- la figure 15 représente une vue de dessus d'une pièce conforme à la figure 14 avant flexion,
- la figure 16 représente une vue de dessus d'une pièce conforme à une variante de réalisation de la figure 15,
- la figure 17 représente une vue de dessus d'une pièce conforme à la figure 15 ou 16 après flexion,
- la figure 18 représente une vue de dessus d'une pièce conforme à la figure 12 ou 13 après flexion,
- la figure 19 représente une vue de dessus d'une pièce conforme à la figure 15 comportant une zone présentant des propriétés mécaniques contrôlées, avant flexion,
- la figure 20 représente une vue de dessus de la pièce de la figure 19 après flexion,
- la figure 21 représente une vue de dessus d'une pièce conforme à la figure 5 avant flexion,
- la figure 22 représente la pièce de la figure 21 après flexion,
- les figure 23, 24 et 25 représentent des vues en coupe de pièces conformes à l'invention et illustrent la possibilité de disposer les bossages sur une face interne de pièce,
- la figure 26 représente une vue de dessus de la pièce de la figure 9 avant flexion,
- la figure 27 représente une vue de dessus de la pièce de la figure 26 après flexion,
- la figure 28 représente une variante de réalisation de la figure 26 comportant une zone de résistance mécanique contrôlée au niveau de zone destinée à opérer la flexion,
- la figure 29 représente une vue de dessus de la pièce de la figure 28 après flexion,
- la figure 30 représente une vue en coupe d'une pièce variante de la figure 9 sur laquelle les bossages réalisés par emboutissage sont formés sur la surface interne de la pièce, avant flexion,
- la figure 31 représente la pièce de la figure 30 après flexion,
- la figure 32 représente une pièce similaire à la figure 30 comportant une zone de résistance contrôlée,
- la figure 33 représente la pièce de la figure 32 après flexion,
- la figure 34 représente une variante de réalisation de pièce selon laquelle les bossages sont dissymétriques,
- la figure 35 représente une vue en perspective de la pièce de la figure 34,
- la figure 36 représente une variante de réalisation de la figure 35 selon laquelle les bossages sont formés dans le fond de gorges longitudinales formées sur une face extérieure de la pièce,
- les figures 37, 38, 39, 40, 41 et 42 représentent des vues en coupe transversale de pièces conformes à diverses variantes de réalisation de l'invention,
- la figure 43 représente une vue en coupe d'une pièce conforme à une variante d'implantation des bossages, avant flexion,
- la figure 44 représente la pièce de la figure 43 après flexion,
- la figure 45 représente une variante de réalisation de la figure 43, avant flexion,
- la figure 46 représente la pièce de la figure 45 après flexion,
- la figure 47 représente une vue en perspective avant flexion d'une pièce conforme à une variante de réalisation de l'invention adaptée pour assurer un blocage selon 3 axes X, Y et Z, une fois la flexion réalisée,
- la figure 48 représente une vue de dessus de la pièce de la figure 47 après flexion,
- la figure 49 représente une autre vue en perspective de la figure 48,
- la figure 50 représente une vue en perspective d'une autre variante de réalisation de l'invention, avant flexion
- la figure 51 représente une vue de dessus de la pièce de la figure 50 avant flexion et
- la figure 52 représente une vue de dessus de la pièce de la figure 51 après flexion.

On a représenté sur la figure 3 annexée un exemple de réalisation de poutre métallique conforme à la présente invention.

La poutre 100 illustrée sur la figure 3 est formée d'un tube qui comprend sur l'une de ses faces internes 110, une série de bossages 150 préformés répartis sur sa longueur et définissant entre eux des intervalles 159.

L'on comprend à l'examen comparé des figures 3 et 4, que l'angle de flexion de la pièce de structure 100 autour d'un axe transversal à sa longueur, est limité lorsque les flancs 52, 154 de deux bossages 150 adjacents viennent en contact comme illustré sur la figure 4.

Le cas échéant les intervalles précités 159 formés entre deux bossages adjacents 150 peuvent être de section rectangulaire de sorte que la flexion est limitée lorsque deux bossages adjacents 50 viennent en appui au niveau de leur sommet.

Cependant de préférence comme on l'a illustré sur les figures annexées, selon l'invention les bossages 150 définissent entre eux des intervalles 159 en forme de dièdre, de section croissante en direction du sommet des bossages, de sorte que la flexion est limitée lorsque deux bossages adjacents 150 viennent en appui sur la quasi-totalité de leurs faces en regard 152 et 154.

Comme on l'a schématisé sur la figure 4 annexée, de préférence les bossages 150 sont formés sur une face interne de la poutre 100, et non pas sur une face externe de celle-ci, de sorte que la poutre ne présente pas d'aspérités externes. Cette disposition peut s'appliquer à l'ensemble des variantes de réalisation de l'invention.

De préférence les bossages 150 sont définis par des génératrices toutes parallèles entre elles et parallèles à un axe de courbure.

Ces génératrices définissant les bossages sont de préférence orthogonales à l'axe longitudinal ou axe d'élongation principale de la pièce. Ainsi les bossages 150 s'étendent transversalement à l'axe longitudinal ou axe d'élongation principale de la pièce.

Dans ce cas les bossages 150 ont des sections constantes sur toute leur largeur et la pièce fléchit autour de l'axe de courbure précité en se déformant dans un plan général orthogonal à cet axe.

Cependant si l'on veut imposer une flexion de la pièce en trois dimensions, c'est-à-dire imposer une flexion autour d'un axe qui n'est pas orthogonal à un plan moyen de la pièce fléchie, on peut prévoir des bossages 150 dont les flancs ne sont pas définis par des génératrices parallèles entre elles de sorte que les bossages ont une section variable sur leur largeur.

Selon les modes de réalisation illustrés sur les figures 3 à 5, tous les bossages ont des sections identiques, en forme de trapèze isocèle (base 151 et face supérieure 153 parallèles entre elles et flancs 152, 154 de même hauteur, soit deux angles adjacents à la base 151 égaux). La base 151 est adjacente à la face interne de la pièce 100. La face supérieure 153 est parallèle à la base 151. Et les flancs 152 et 154 forment les côté du trapèze. Dans ce cas si les intervalles 159 sont également tous identiques, l'invention conduit à une courbure de rayon constant.

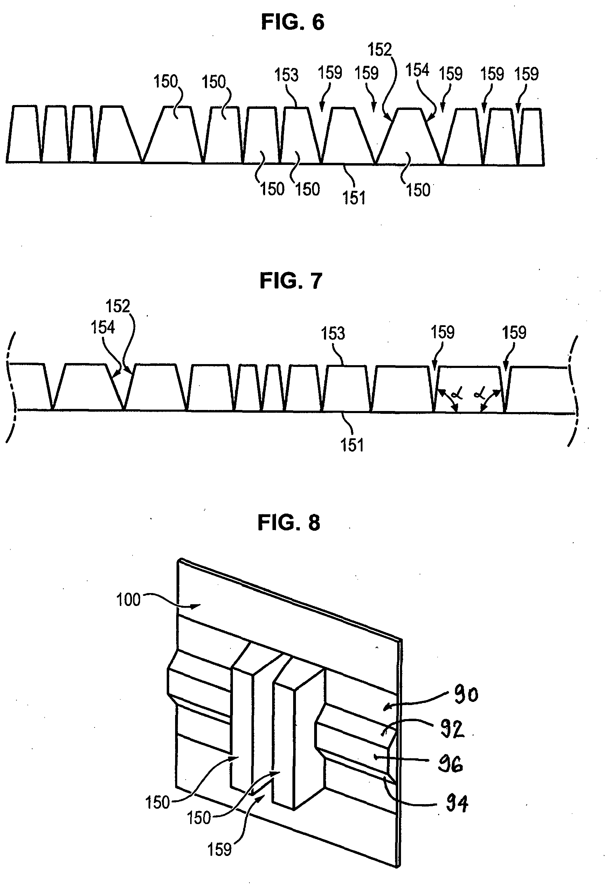

Cependant comme illustré sur la figure 6 on peut prévoir des intervalles 159 de sections variables et comme illustré sur la figure 7 des bossages 150 de sections variables afin de définir un rayon de courbure évolutif selon la zone en longueur considérée de la pièce 100. Dans ce cas les bossages 150 peuvent avoir une section en trapèze isocèle mais présentant des angles différents d'un bossage à l'autre, ou avoir une section en trapèze quelconque c'est-à-dire que les deux angles adjacents à la base 151 ne sont plus égaux).

Bien entendu on peut combiner les dispositions illustrées sur les figures 6 et 7, c'est-à-dire que l'on peut prévoir de combiner des intervalles 159 de sections variables avec des bossages 150 de sections variables.

Les bossages 150 peuvent être venus de matière sur la pièce 100, par exemple être formés par usinage. Ils peuvent également être formés d'une pièce rapportée sur la poutre 100.

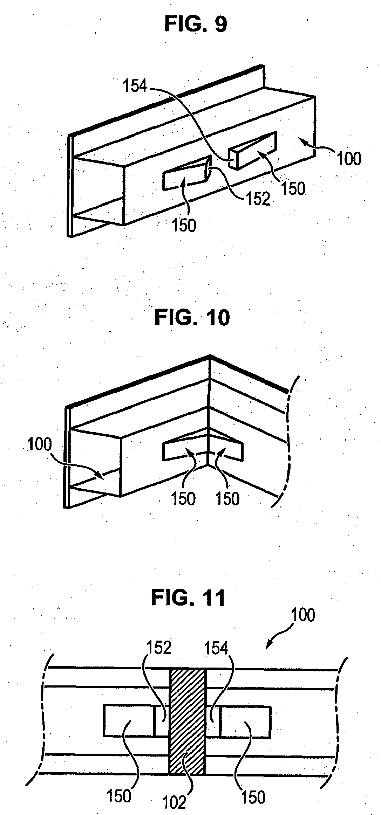

Les bossages 150 peuvent également être formés par emboutissage de la pièce 100, comme illustré sur la figure 9. On aperçoit en effet sur la figure 9 deux bossages 150 réalisés par emboutissage et possédant des faces en regard 152, 154 adaptées pour venir en contact comme illustré sur la figure 10 lorsque la flexion de la pièce 100 atteint un seuil.

Selon un mode de réalisation particulier et non limitatif conforme à l'invention, les bossages 150 possèdent une face de sommet 153 plane et des flancs 152, 154 inclinés par rapport à leur base 151 d'un angle α compris entre 40° et 80°, de préférence de l'ordre de 60°.

On a représenté sur la figure 8 annexée une variante de réalisation conforme à la présente invention selon laquelle deux bossages 150 sont fixés au niveau de la zone d'une pièce dont on veut particulièrement contrôler la courbure, c'est-à-dire en l'espèce limiter le rayon de courbure pour éviter une rupture intempestive. L'homme de l'art comprendra à l'examen de cette figure 8 que la présente invention peut ainsi s'appliquer à une zone limitée d'une pièce.

L'on observera par ailleurs que selon le mode de réalisation illustré sur la figure 8, les deux bossages 150 s'appuient sur une nervure longitudinale 90 formée sur la pièce 100. On entend par « longitudinale » le fait que la nervure 90 s'étend parallèlement à l'axe longitudinal ou axe d'élongation principale de la pièce 100. La nervure 90 est formée par exemple de deux flancs 92, 94 raccordés au corps de la pièce 100 et d'un sommet 96 qui raccorde entre eux les flancs 92, 94 et s'étend parallèlement au plan moyen du corps de la pièce 100. Les flancs 92, 94 sont globalement non parallèles au corps de la pièce 100. Ils forment de préférence entre eux un dièdre concave en direction du corps de la pièce 100, par exemple en étant inclinés entre eux d'un angle compris entre 45° et 90°, typiquement de l'ordre de 80°.

L'homme de l'art comprendra que la présence d'une telle nervure longitudinale 90 permet de rigidifier la pièce à l'égard d'une sollicitation en flexion autour d'un axe perpendiculaire à son axe longitudinal ou axe d'élongation principale.

La présence d'une telle nervure longitudinale 90 est applicable à l'ensemble des modes de réalisation de la présente invention, sur toute la longueur de la pièce 100 ou une partie seulement de cette longueur. La rigidité liée à la nervure 90 peut aisément être adaptée en contrôlant la rigidité, par exemple l'épaisseur et la hauteur des flancs 92, 94.

Les bossages 150 peuvent par exemple être réalisés sous forme de pièces en acier embouties et rapportées, par exemple soudées sur la pièce 100.

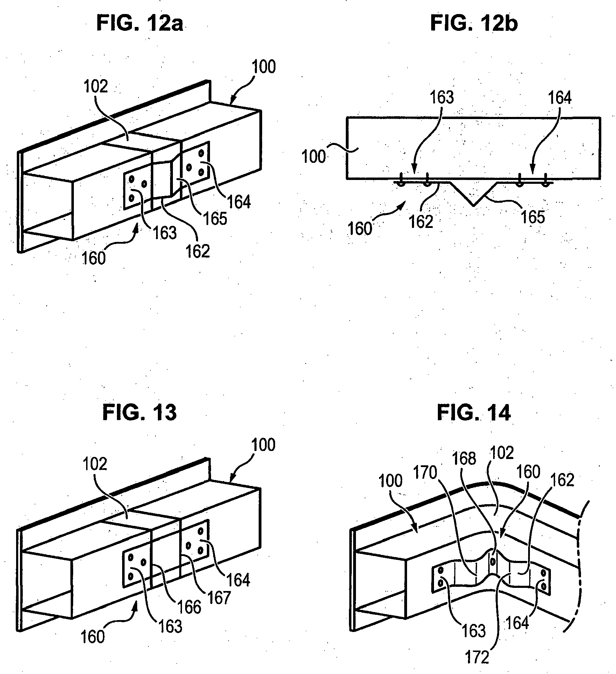

On a représenté sur les figures 12, 13 et 14 trois variantes de réalisation conformes à la présente invention selon lesquelles les deux bossages 150 sont formés par des moyens 160, en l'espèce un lame 162 par exemple métallique, adaptés pour être déformés lors de la flexion et formés ainsi au moins deux bossages 150 susceptibles de venir en contact si l'angle de flexion dépasse un seuil.

Selon le mode de réalisation représenté sur la figure 12, la lame 162 fixée sur la poutre 100 par ses extrémités 163, 164 respectivement de part et d'autre de la zone de flexion 102 possède une nervure 165 en son centre, par exemple en forme de dièdre, convexe vers l'extérieur. Lors d'une flexion prononcée, les pieds de la nervure 165 raccordant la nervure 165 aux deux tronçons d'extrémité de la lame 162 viennent en appui et limitent la flexion.

Selon le mode de réalisation représenté sur la figure 13, la lame 162 fixée sur la poutre 100 par ses extrémités 163, 164 respectivement de part et d'autre de la zone de flexion 102 est initialement plane mais possède deux amorces de pliage 166, 167 parallèles entre elles disposées respectivement de part et d'autre de la zone de flexion. Lors d'une flexion prononcée, la pièce 162 se déforme générant un évasement entre les deux amorces de pliage 166, 167 de sorte que les pieds de l'évasement précité raccordant ledit évasement aux deux tronçons d'extrémité de la lame 162 viennent en appui et limitent la flexion.

Selon le mode de réalisation représenté sur la figure 14, la lame 162 initialement plane est fixée sur la poutre 100 par ses extrémités 163, 164 respectivement de part et d'autre de la zone de flexion 102 et en son centre 168 au niveau de la zone de flexion 102. Lors d'une flexion prononcée, comme illustré sur la figure 14 la pièce 162 se déforme générant deux évasements 170, 172 respectivement entre la fixation centrale 168 et les deux fixations latérales 163, 164 de sorte que les sommets des évasements 170, 172 précités viennent en appui et limitent la flexion.

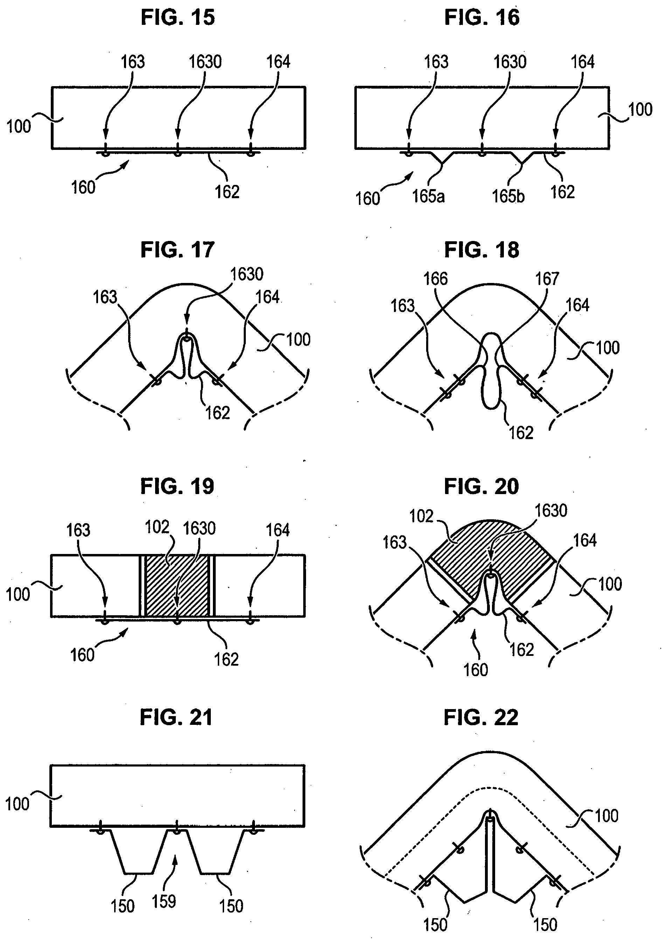

La figure 15 qui représente une vue de dessus d'une pièce conforme à la figure 14 avant flexion, illustre particulièrement des points de soudure 163, 164, 1630 de la lame 162 sur la poutre.

La figure 16 qui représente une vue de dessus d'une pièce conforme à une variante de réalisation de la figure 15 illustre les mêmes points de soudure et montre des amorces de pliage réalisées sous forme de nervures 165a et 165b réalisées entre la fixation centrale 1630 et les fixations latérales 163 et 164. Les nervures 165a et 165b peuvent être rectilignes et parallèles à l'axe de flexion recherché.

La figure 17 qui représente une vue de dessus d'une pièce conforme à la figure 15 ou 16 après flexion, illustre la coopération définit entre les sommets des bossages pour limiter la flexion.

La figure 18 qui représente une vue de dessus d'une pièce conforme à la figure 12 ou 13 après flexion, illustre la coopération définit entre les pieds des évasements pour limiter la flexion.

La figure 19 qui représente une vue de dessus d'une pièce conforme à la figure 15 illustre en particulier une zone 102 présentant des propriétés mécaniques contrôlées, avant flexion. Une telle zone 102 sera décrite plus en détail par la suite.

La figure 20 représente une vue de dessus de la pièce de la figure 19 après flexion, et illustre l'impact de la zone 102 facilitant la flexion.

La figure 21 représente une vue de dessus d'une pièce conforme à la figure 5 avant flexion, et illustre la possibilité de fixer par soudure une pièce préformée comportant des bossages sur une poutre.

La figure 22 représente la pièce de la figure 21 après flexion.

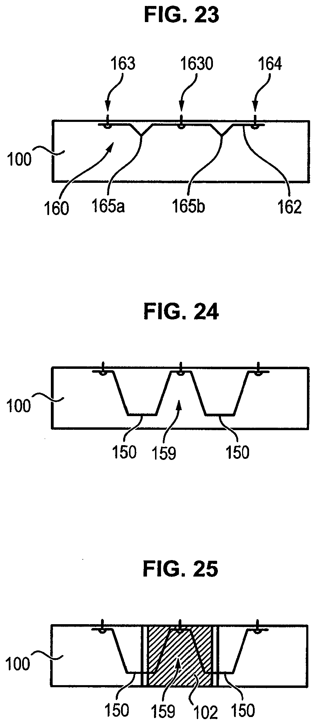

Les figure 23, 24 et 25 représentent des vues en coupe de pièces conformes à l'invention et illustrent la possibilité de disposer les moyens de limitation de flexion sur une face interne de pièce. Selon la figure 23 les moyens de limitation de flexion sont formés d'une lame 162 similaire à la figure 16 comportant deux amorces 165a et 165b. Selon la figure 24 les moyens de limitation de flexion sont similaires aux figures 8 et 21. La figure 25 illustre particulièrement la possibilité de combiner les moyens de limitation de flexion avec une zone 102 de propriétés mécaniques contrôlées.

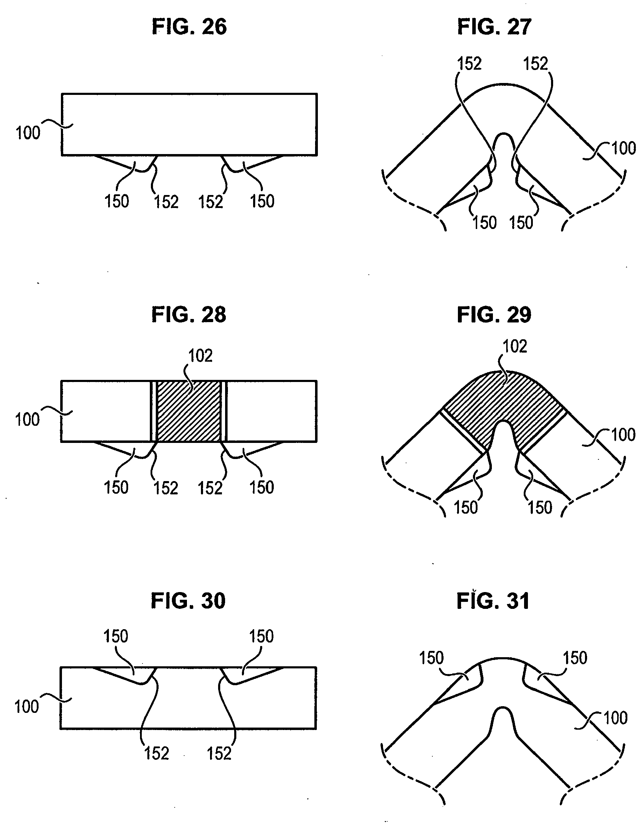

Les figures 28 et 29 qui représentent respectivement une pièce avant et après flexion illustrent particulièrement la possibilité de combiner une zone 102 de résistance mécanique contrôlée au niveau de zones destinée à opérer la flexion, avec les moyens de limitation de flexion illustrés sur les figures 26 et 27.

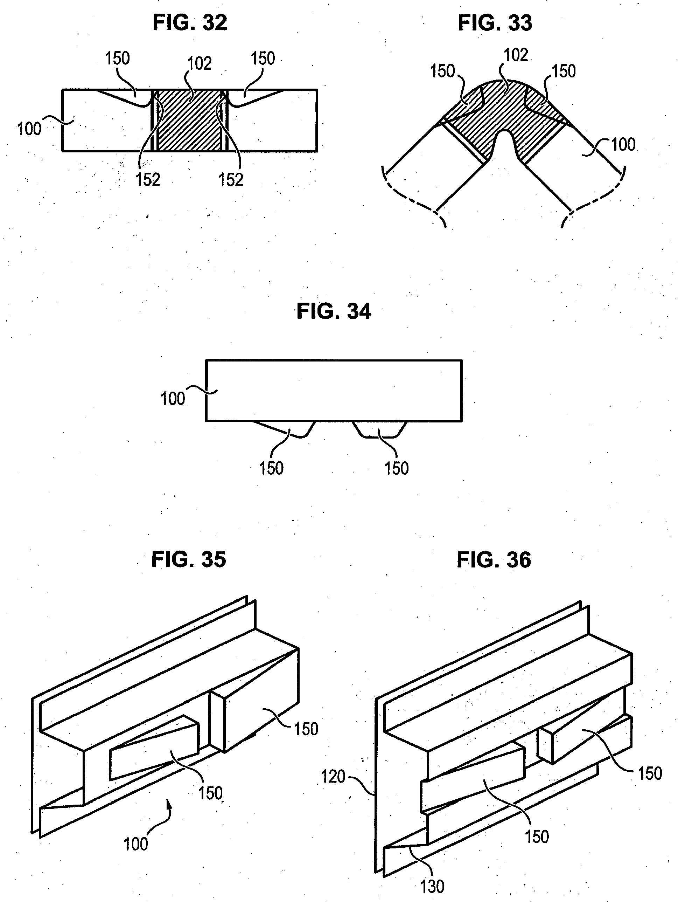

De même les figures 32 et 33 qui représentent respectivement une pièce avant et après flexion illustrent particulièrement la possibilité de combiner une zone 102 de résistance mécanique contrôlée au niveau de zones destinée à opérer la flexion, avec les moyens de limitation de flexion illustrés sur les figures 30 et 31.

La figure 34 représente une variante de réalisation de pièce selon laquelle les bossages sont dissymétriques, l'un des bossages ayant une section droite globalement triangulaire, tandis que le bossage adjacent a une section globalement rectangulaire.

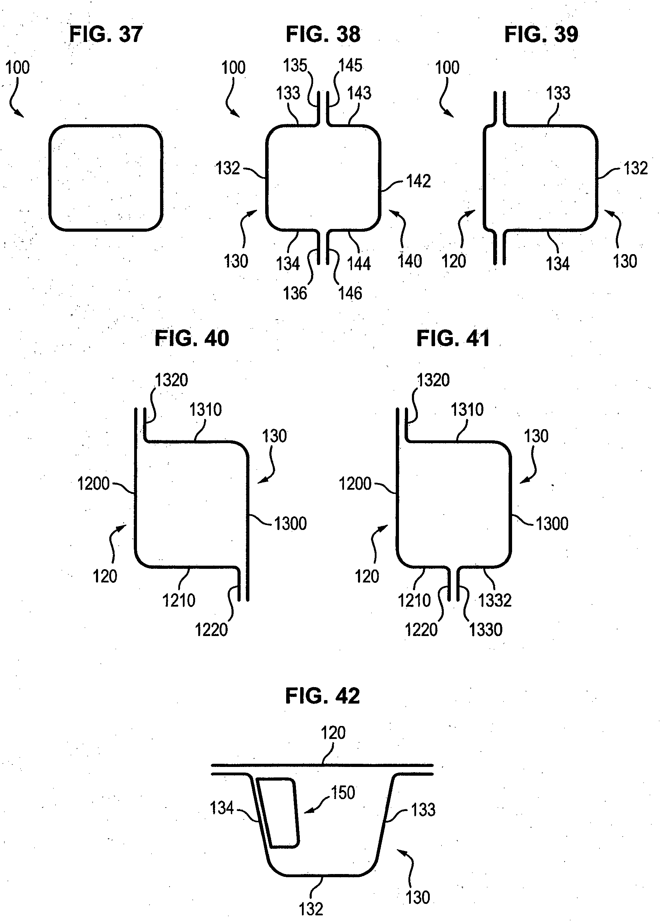

La figure 35 représente une vue en perspective de la pièce de la figure 34, et illustre ainsi des bossages réalisés par emboutissage sur le fond de pièce d'une poutre telle qu'illustrée sur la figure 39.

La figure 36 représente une variante de réalisation de la figure 35 selon laquelle les bossages sont formés dans le fond de gorges longitudinales formées sur une face extérieure du fond de pièce de la pièce illustrée sur la figure 39.

Bien entendu les moyens 160 peuvent faire l'objet d'autres variantes de réalisation adaptées pour être déformées lors de la flexion et former ainsi au moins deux bossages susceptibles de venir en contact si l'angle de flexion dépasse un seuil.

Selon une autre caractéristique avantageuse, la pièce métallique allongée conforme à la présente invention comprend au moins une zone présentant des propriétés contrôlées de résistance mécanique plus faible que le corps principal de ladite pièce métallique, au niveau de la zone 102 destinée à la flexion. Cette présence d'une zone 102 présentant des propriétés contrôlées de résistance mécanique plus faible que le corps principal de la pièce, peut s'appliquer à l'ensemble des modes de réalisation de l'invention.

De préférence, cette zone 102 de résistance mécanique faible est réalisée selon un procédé consistant à chauffer un flan métallique à une température supérieure à la température de transition austénitique, puis à conformer le flan ainsi chauffé dans un outil d'emboutissage possédant un circuit de refroidissement contrôlé et localement un système de chauffe permettant ainsi, par trempe différentielle, d'obtenir des caractéristiques mécaniques variées.

Sur les figures 11, 19, 20, 28, 29, 32 et 33 la zone de faible résistance mécanique 102 est hachurée.

La présence de la zone 102 de résistance faible prédéfinie permet de contrôler le lieu de la flexion et de garantir l'efficacité des moyens de limitation à base de bossages.

Comme on l'a dit précédemment la poutre 100 peut être un tube monobloc de section polygonale ou incurvée quelconque venue de matière, par exemple mais non limitativement un tube de section carrée, comme illustré sur la figure 37, ou encore un tube formé par l'assemblage de plusieurs pièces comme illustré sur les figures 38 à 41.

Sur la figure 38 la poutre 100 est formée par assemblage de deux pièces symétriques 130, 140, montées tête bêche formées chacune d'un fond de pièce 132, 142 encadré par deux murets transversaux 133, 134 et 143, 144, formant un U avec le fond de pièce 132 et 142, lesquels murets sont eux-mêmes prolongés à leur extrémité libre opposée au fond de pièce 132, 142, par deux feuillures 135, 136 et 145, 146 dirigées vers l'extérieur et globalement parallèles au fond de pièce 132, 142. Les deux pièces 130 et 140 sont fixées, par exemple par soudure, par leurs feuillures 135, 136 et 145, 146 respectivement accolées.

Sur la figure 39 la poutre 100 est formée par assemblage de deux pièces 130, 120. La pièce 130 comprend un fond de pièce 132 encadré par deux murets transversaux 133, 134 formant un U avec le fond de pièce 132, lesquels murets 133, 134 sont eux-mêmes prolongés à leur extrémité libre opposée au fond de pièce 132, par deux feuillures 135, 136 dirigées vers l'extérieur et globalement parallèles au fond de pièce 132. La pièce 120 forme un couvercle, globalement plan mais pouvant comprendre une nervure en sa partie centrale, recouvrant la pièce 130 et accolé aux feuillures 135, 136. Les- deux pièces 120 et 130 sont fixées, par exemple par soudure, au niveau des feuillures 135, 136.

Sur la figure 40 la poutre 100 est formée par assemblage de deux pièces 120, 130 globalement symétriques comportant chacune deux parois principales orthogonales entre elles 1200 et 1210, 1300 et 1310, dont l'une est prolongée par une ailette orthogonale 1220, 1320. Les ailettes 1220 et 1320 étant accolées aux parois 1300 et 1200, les dites parois1200 et 1210, 1300 et 1310 définissent en combinaison une cage centrale de section carrée.

La figure 41 représente une variante de réalisation de la figure 40 selon laquelle les deux pièces 120, 130 ne sont pas symétriques de sorte que l'une des parois 1300 comporte une ailette 1330 reliée par un décrochement 1332 de sorte que l'ailette 1330 accolée à l'ailette 1220 soit située à mi largeur de la cage centrale de section carrée.

La figure 42 illustre la possibilité de disposer les bossages sur un mur 133 ou 134 d'une pièce par exemple conforme à la figure 39.

Bien entendu la présente invention n'est pas limitée aux modes de réalisation qui viennent d'être décrits, mais s'étend à toutes variantes conformes à son esprit.

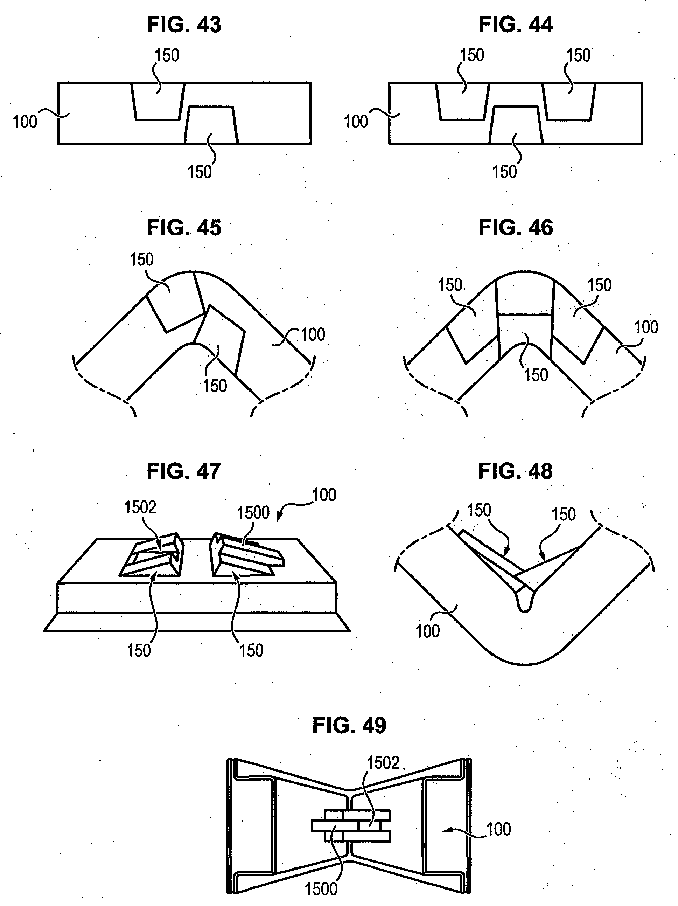

La figure 43 représente une vue en coupe d'une pièce conforme à une variante d'implantation des bossages, avant flexion. En l'espèce il est prévu deux bossages sensiblement en regard tout en étant décalés entre eux de sorte que l'un de leurs flans respectifs puissent venir en contact lors d'une flexion, respectivement sur des faces internes opposées de la poutre.

La figure 44 représente la pièce de la figure 43 après flexion, et illustre la coopération ainsi définie entre les bossages.

La figure 45 représente une variante de réalisation de la figure 43, avant flexion, selon laquelle il est prévu deux bossages sur une face interne d'une poutre et un troisième bossage sur une face interne opposée de la poutre, en regard de l'intervalle défini entre les deux bossages premiers cités.

La figure 46 représente la pièce de la figure 45 après flexion.

La figure 47 représente une vue en perspective avant flexion d'une pièce conforme à une variante de réalisation de l'invention adaptée pour assurer un blocage selon 3 axes X, Y et Z, une fois la flexion réalisée. En l'espèce il est prévu deux bossages 150 conçus pour venir en appui et en prise lors d'une flexion de la poutre autour d'un axe X, les deux bossages ayant des structures à complément de forme susceptibles de s'emboiter lors de la flexion selon l'axe X pour interdire tout déplacement selon les axes Y et Z respectivement orthogonaux. Les structures à complément de forme précitées peuvent comprendre par exemple une nervure 1500 orientées transversalement à l'axe X sur l'un des bossages et une gorge complémentaire 1502 sur le bossage en regard. Bien entendu de nombreuses configurations de structures à complément de forme peuvent être envisagées.

La figure 48 représente une vue de dessus de la pièce de la figure 47 après flexion.

La figure 49 représente une autre vue en perspective de la figure 48, après flexion.

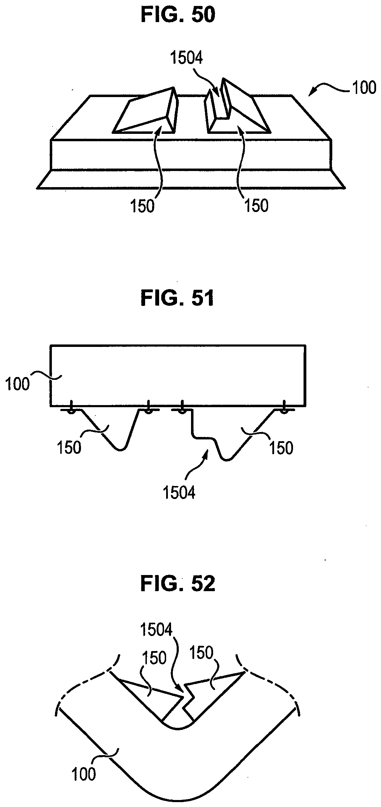

Les figures 50 et 51 représentent des vues en perspective d'une autre variante de réalisation de l'invention, avant flexion, selon laquelle l'un des bossages 150 possède en son sommet un décrochement concave 1504 adapté pour recevoir le sommet convexe complémentaire du bossage adjacent, lors d'une flexion, comme illustré sur la figure 52.

## Revendications

1. Longeron métallique pour un véhicule automobile, constitué d'une structure choisie dans le groupe comprenant un tube monopièce de section polygonale ou incurvée quelconque, par exemple un tube de section carrée, ou un tube formé par l'assemblage de plusieurs pièces, **caractérisé en ce qu'**il comprend au moins sur une face, des moyens (150, 160) adaptés pour former, lors d'une flexion de la pièce, au moins deux bossages (150) portés en contact par la flexion de sorte que la flexion de la pièce de structure soit limitée lorsque au moins des portions des faces en regard de deux bossages adjacents (150) viennent en appui.

2. Longeron selon la revendication 1, **caractérisé en ce qu'**il comprend au moins sur une face, au moins deux bossages préformés (150), définissant entre eux des intervalles (159) de section contrôlée de sorte que la flexion du longeron soit limitée lorsque au moins des portions des faces en regard (152, 154) des deux bossages adjacents (150) viennent en appui.

3. Longeron selon l'une des revendications 1 ou 2, **caractérisé en ce qu'**il comprend au moins sur une face, une série de bossages (150), répartis sur sa longueur et définissant entre eux des intervalles (159) de section contrôlée de sorte que la flexion du longeron soit limitée lorsque au moins des portions des faces en regard des deux bossages adjacents (150) viennent en appui.

4. Longeron selon l'une des revendications 1 à 3, **caractérisé en ce que** les bossages (150) définissent entre eux des intervalles (159) de section croissante en direction du sommet des bossages.

5. Longeron selon l'une des revendications 1 à 4, **caractérisé en ce que** les bossages (150) ont des sections variables sur leur largeur.

6. Longeron selon l'une des revendications 1 à 5, **caractérisé en ce que** les bossages (150) ont des sections identiques.

7. Longeron selon l'une des revendications 1 à 6, **caractérisé en ce que** les bossages (150) ont des sections en forme de trapèze.

8. Longeron selon l'une des revendications 1 à 7, **caractérisé en ce que** les bossages (150) possèdent une face de sommet (153) plane et des flancs (152, 154) inclinés par rapport à leur base (151) d'un angle α compris entre 40° et 80°, de préférence de l'ordre de 60°.

9. Longeron selon l'une des revendications 1 à 8, **caractérisé en ce que** les bossages (150) sont formés par emboutissage.

10. Longeron selon la revendication 1, **caractérisé en ce qu'**il comprend des moyens (160) adaptés pour être déformés lors de la flexion et former ainsi au moins deux bossages susceptibles de venir en contact si l'angle de flexion dépasse un seuil.

11. Longeron selon la revendication 10, **caractérisé en ce qu'**il comprend une lame (162), par exemple métallique, adaptée pour être déformée lors de la flexion et formée au moins deux bossages (170, 172) susceptibles de venir en contact si l'angle de flexion dépasse un seuil.

12. Longeron selon l'une des revendications 1 à 11, **caractérisé en ce que** les bossages (150) sont formés sur une face interne du longeron (100).

13. Longeron selon l'une des revendications 1 à 12, **caractérisé en ce que** des bossages (150) sont prévus sur deux faces internes opposées du longeron.

14. Longeron selon l'une des revendications 1 à 13, **caractérisé en ce que** les bossages (150) sont venus de matière sur le longeron (100).

15. Longeron selon l'une des revendications 1 à 14, **caractérisé en ce que** l'un au moins des bossages (150) possède en son sommet une structure (1504) adapté pour recevoir le sommet complémentaire d'un bossage adjacent, lors d'une flexion.

## Patentansprüche

1. Langsträger für ein Fahrkraftzeug, der aus einer Struktur besteht, die aus der Gruppe ausgewählt ist, die ein einstückiges Rohr mit einem polygonalen bzw. kurvenförmigen Schnitt umfasst, wie etwa ein Rohr viereckigen Schnitts, oder ein Rohr umfasst, das durch die Montage verschiedener Teile gebildet ist, **dadurch gekennzeichnet, dass** er, mindestens auf einer Seite, Mittel (150, 160) umfasst, die angepasst sind, um bei einer Biegung des Teiles mindestens zwei Erhebungen (150) zu bilden, die in Kontakt miteinander durch die Biegung kommen, so dass die Biegung des Strukturteils begrenzt ist, wenn mindestens Teile der gegenüberliegenden Seiten von zwei angrenzenden Erhebungen (150) aneinander stoßen.

2. Langsträger nach Anspruch 1, **dadurch gekennzeichnet, dass** er mindestens auf einer Seite mindestens zwei vorgeformte Erhebungen (150) umfasst, die Abstände (159) kontrollierten Schnitts zwischen diesen definieren, so dass die Biegung des Langsträgers begrenzt ist, wenn mindestens Teile der gegenüberliegenden Seiten (152, 154) der zwei angrenzenden Erhebungen (150) aneinanderstoßen.

3. Langsträger nach einem der Ansprüche 1 oder 2, **dadurch gekennzeichnet, dass** er mindestens auf einer Seite eine Reihe von Erhebungen (150) umfasst, die über seiner Länge verteilt sind und Abstände (159) kontrollierten Schnitts zwischen diesen definieren, so dass die Biegung des Langsträgers begrenzt ist, wenn mindestens Teile der gegenüberliegenden Seiten der zwei angrenzenden Erhebungen (150) aneinanderstoßen.

4. Langsträger nach einem der Ansprüche 1 bis 3, **dadurch gekennzeichnet, dass** die Erhebungen (150) Abstände zwischen diesen definieren (150), deren Schnitt in Richtung zur Spitze der Erhebungen zunimmt.

5. Langsträger nach einem der Ansprüche 1 bis 4, **dadurch gekennzeichnet, dass** die Erhebungen (150) entlang deren Breite wechselnde Schnitte haben.

6. Langsträger nach einem der Ansprüche 1 bis 5, **dadurch gekennzeichnet, dass** die Erhebungen (150) identische Schnitte haben.

7. Langsträger nach einem der Ansprüche 1 bis 6, **dadurch gekennzeichnet, dass** die Erhebungen (150) trapezförmige Schnitte haben.

8. Langsträger nach einem der Ansprüche 1 bis 7, **dadurch gekennzeichnet, dass** die Erhebungen (150) eine flache Spitzenseite (153) aufweisen und Flansche (152, 154) aufweisen, die bezüglich deren Fuß (151) um einen Winkel α geneigt sind, der bei zwischen 40° und 80° liegt und vorzugsweise etwa 60° beträgt.

9. Langsträger nach einem der Ansprüche 1 bis 8, **dadurch gekennzeichnet, dass** die Erhebungen (150) durch Stanzen gebildet sind.

10. Langsträger nach Anspruch 1, **dadurch gekennzeichnet, dass** er Mittel (160) umfasst, die angepasst sind, um bei der Biegung verformt zu werden und somit mindestens zwei Erhebungen zu bilden, die in Kontakt miteinander kommen können, wenn der Biegewinkel einen Schwellenwert überschreitet.

11. Langsträger nach Anspruch 10, **dadurch gekennzeichnet, dass** er eine Leiste (162), etwa eine metallische Leiste, umfasst, die angepasst ist, um bei der Biegung verformt zu werden und mindestens zwei Erhebungen (170, 172) zu bilden, die in Kontakt miteinander kommen können, wenn der Biegewinkel einen Schwellenwert überschreitet.

12. Langsträger nach einem der Ansprüche 1 bis 11, **dadurch gekennzeichnet, dass** die Erhebungen (150) auf einer inneren Seite des Langsträgers (100) gebildet sind.

13. Langsträger nach einem der Ansprüche 1 bis 12, **dadurch gekennzeichnet, dass** Erhebungen (150) auf zwei gegenüberliegenden inneren Seiten des Langsträgers vorgesehen sind.

14. Langsträger nach einem der Ansprüche 1 bis 13, **dadurch gekennzeichnet, dass** die Erhebungen (150) einteilig auf dem Langsträger (100) gebildet sind.

15. Langsträger nach einem der Ansprüche 1 bis 14, **dadurch gekennzeichnet, dass** mindestens eine der Erhebungen (150) an deren Spitze eine Struktur (1504) aufweist, die angepasst ist, um die ergänzende Spitze einer angrenzenden Erhebung im Falle einer Biegung zu empfangen.

## Claims

1. Metal rail for a motor vehicle, consisting of a structure selected from the group comprising a single-piece tube of any polygonal or curved section, such as a tube of a square section, or a tube formed by assembling several pieces, **characterised in that** it comprises, at least on one side, means (150, 160) adapted to form, upon bending of the piece, at least two bosses (150) which are brought into contact by the bending, so that the bending of the structural piece is limited when at least parts of the opposing sides of two adjoining bosses (150) abut against each other.

2. Rail according to claim 1, **characterised in that** it comprises at least on one side, at least two preformed bosses (150), defining between them spaces (159) of a controlled section, so that the bending of the rail is limited when at least parts of the opposing sides (152, 154) of the two adjoining bosses (150) abut against each other.

3. Rail according to one of claims 1 or 2, **characterised in that** it comprises at least on one side, a series of bosses (150), distributed along its length and defining between them spaces (159) of a controlled section, so that the bending of the rail is limited when at least parts of the opposing sides of the two adjoining bosses (150) abut against each other.

4. Rail according to one of claims 1 to 3, **characterised in that** the bosses (150) define between them spaces (159) of increasing section in the direction of the peak of the bosses.

5. Rail according to one of claims 1 to 4, **characterised in that** the bosses (150) have sections which are variable in their width.

6. Rail according to one of claims 1 to 5, **characterised in that** the bosses (150) have identical sections.

7. Rail according to one of claims 1 to 6, **characterised in that** the bosses (150) have trapezoidal sections.

8. Rail according to one of claims 1 to 7, **characterised in that** the bosses (150) have a flat peak side (153) and flanges (152, 154) that are inclined with respect to their base (151) at an angle α comprised between 40° and 80°, preferably of about 60°.

9. Rail according to one of claims 1 to 8, **characterised in that** the bosses (150) are formed by stamping.

10. Rail according to claim 1, **characterised in that** it comprises means (160) adapted to be deformed upon bending and to form thereby at least two bosses capable of making contact if the bending angle exceeds a threshold value.

11. Rail according to claim 10, **characterised in that** it comprises a strip (162), for example metallic, adapted to be deformed upon bending and to form at least two bosses (170, 172) capable of making contact if the bending angle exceeds a threshold value.

12. Rail according to one of claims 1 to 11, **characterised in that** the bosses (150) are formed on an inner side of the rail (100).

13. Rail according to one of claims 1 to 12, **characterised in that** bosses (150) are provided on two opposing inner sides of the rail.

14. Rail according to one of claims 1 to 13, **characterised in that** the bosses (150) are formed as an integral part on the rail (100).

15. Rail according to one of claims 1 to 14, **characterised in that** at least one of the bosses (150) has at its peak a structure (1504) adapted to receive, upon bending, the complementary peak of an adjoining boss.
